# EUROPEAN PATENT APPLICATION

(11) **EP 3 654 156 A1**
(43) Date of publication of application: **20.05.2020**
(21) Application number: 17917770.4
(22) Date of filing: 25.12.2017
(51) Int. Cl.: G06F 3/048

(54) **METHOD AND APPARATUS FOR CUSTOMIZING STATUS BAR ON TERMINAL, AND ELECTRONIC DEVICE**

(30) Priority: 10.07.2017 CN 201710556016
(71) Applicant: Gree Electric Appliances (Wuhan) Co., Ltd., Hubei 430056 (CN); Gree Electric Appliances, Inc. of Zhuhai, Zhuhai, Guangdong 519070 (CN)
(72) Inventor: JIN, Shangyue, Zhuhai Guangdong 519070 (CN)
(74) Representative: V.O.
(86) International application number: PCT/CN2017/118245
(87) International publication number: WO 2019/010925

(57) **Abstract**

A method and apparatus for customizing status bar of terminal, and an electronic device are provided. The method includes: determining an application set displayable in a status bar (101); acquiring the type of applications in the application set (102); determining, according to the type of the applications, an application which matches a preset condition from the application set (103); and displaying the determined application in the status bar (104). The method allows applications that are displayed in the status bar to adapt to different user scenarios as well as different usage states of a terminal, thus carrying out more accurate display and improving user experience.

## Description

### Technical Field

The disclosure relates to the technical field of terminals, and particularly relates to a method and apparatus for customizing status bar of terminal, and an electronic device.

### Background

Currently, a status bar of a terminal can display icons of some system-level applications, such as WIFI, Bluetooth, and screen brightness. These applications can be turned on, turned off, adjusted, etc. by clicking on the icons of the applications.

With the advancement of technology, some applications commonly used by users can also be displayed in the status bar, for example, QQ applications, video applications, and the like. A user does not need to operate an application to be opened on a screen, just clicks on the application in the status bar to directly enter the application, which greatly facilitates the operation of the user.

However, in the process of implementing the disclosure, the inventors have found that the conventional art has the following problems: in the conventional art, an application recently used or frequently used by a user is generally placed in a status bar, which does not consider whether a network environment or geographic location of a current terminal is suitable for opening these applications, so that some applications displayed in the status bar are not currently required by the user, and the application displayed in the status bar is not accurate enough, which reduces the user experience.

### Summary

The technical problem to be solved by the disclosure is to provide a method and apparatus for customizing status bar of terminal, and an electronic device, solving the problem in the conventional art that an application displayed in a status bar cannot accurately meet user demands.

According to an embodiment of the disclosure, a method for customizing status bar of terminal, is provided, which includes:
an application set displayable in a status bar is determined.

A type of an application in the application set is acquired.

According to the type of the application, an application which matches a preset condition is determined from the application set.

The determined application is displayed in the status bar.

In some embodiments, the step of determining an application set displayable in a status bar includes:
an application set displayable in the status bar is determined according to a usage frequency of an application within a preset time period; or
an application set displayable in the status bar is determined according to an application used within a preset historical time period.

In some embodiments, the step of determining, according to the type of the application, an application which matches a preset condition from the application set includes:
when a network currently connected by the terminal is a WIFI network, it is judged whether the type of the application matches a preset type used in the WIFI network.

If the type of the application matches the preset type used in the WIFI network, the application corresponding to the type is used as an application matching a preset condition.

In some embodiments, the step of determining, according to the type of the application, an application which matches a preset condition from the application set includes:
when a network currently connected by the terminal is a mobile network, it is judged whether the type of the application matches a preset type used in the mobile network.

If the type of the application matches the preset type used in the mobile network, the application corresponding to the type is used as an application matching a preset condition.

In some embodiments, the step of determining, according to the type of the application, an application which matches a preset condition from the application set includes:
a current geographic location of the terminal is acquired.

It is judged whether the type of the application matches a preset type used in the geographic location.

If the type of the application matches the preset type used in the geographic location, the application corresponding to the type is used as an application matching a preset condition.

According to another embodiment of the disclosure, an apparatus for customizing status bar of terminal, is provided, which includes:
a first determination component, configured to determine an application set displayable in a status bar;
an acquisition component, configured to acquire a type of an application in the application set;
a second determination component, configured to determine, according to the type of the application, an application which matches a preset condition from the application set; and
a display component, configured to display the determined application in the status bar.

In some embodiments, the first determination component is specifically configured to: determine an application set displayable in the status bar according to a usage frequency of an application within a preset time period; or, determine an application set displayable in the status bar according to an application used within a preset historical time period.

In some embodiments, the second determination component includes: a first judgment unit and a first processing unit.

In some embodiments, the first judgment unit is configured to judge, when a network currently connected by the terminal is a WIFI network, whether the type of the application matches a preset type used in the WIFI network.

In some embodiments, the first processing unit is configured to use, if the type of the application matches the preset type used in the WIFI network, the application corresponding to the type as an application matching a preset condition.

In some embodiments, the second determination component includes: a second judgment unit and a second processing unit.

In some embodiments, the second judgment unit is configured to judge, when a network currently connected by the terminal is a mobile network, whether the type of the application matches a preset type used in the mobile network.

In some embodiments, the second processing unit is configured to use, if the type of the application matches the preset type used in the mobile network, the application corresponding to the type as an application matching a preset condition.

In some embodiments, the second determination component ncludes: an acquisition unit, a third judgment unit and a third processing unit.

In some embodiments, the acquisition unit is configured to acquire a current geographic location of the terminal.

In some embodiments, the third judgment unit is configured to judge whether the type of the application matches a preset type used in the geographic location.

In some embodiments, the third processing unit is configured to use, if the type of the application matches the preset type used in the geographic location, the application corresponding to the type as an application matching a preset condition.

According to another embodiment of the disclosure, an electronic device is provided, which includes: at least one processor; and a memory communicatively connected to the at least one processor, wherein the memory stores an instruction executable by the at least one processor, and the instruction is executed by the at least one processor such that the at least one processor performs the method as mentioned above.

In the embodiments of the disclosure, an application set displayable in a status bar and a type of each application in the application set are acquired, and an application which is finally displayed in the status bar is selected from the application set according to the type of the application and a preset condition. The implementation mode enriches the method for customizing status bar of terminal, and allows applications that are displayed in the status bar to adapt to different user scenarios as well as different usage states of a terminal, thus carrying out more accurate display and improving user experience.

### Brief Description of the Drawings

The one or more embodiments are exemplified by the pictures in the corresponding accompanying drawings, and the exemplary descriptions do not constitute a limitation to the embodiments. Elements in the drawings having the same reference numerals are denoted by like elements, and unless otherwise stated, the figures in the drawings do not constitute a proportional limitation.
Fig. 1 is a schematic flowchart of a method for customizing status bar of terminal, according to Embodiment 1 of the disclosure;
Fig. 2 is a schematic flowchart of a method for customizing status bar of terminal, according to Embodiment 2 of the disclosure;
Fig. 3 is a schematic flowchart of a method for customizing status bar of terminal, according to Embodiment 3 of the disclosure;
Fig. 4 is a schematic flowchart of a method for customizing status bar of terminal, according to Embodiment 4 of the disclosure;
Fig. 5 is a schematic structural diagram of an apparatus for customizing status bar of terminal, according to Embodiment 5 of the disclosure;
Fig. 6 is a schematic structural diagram of another apparatus for customizing status bar of terminal, according to Embodiment 5 of the disclosure; and
Fig. 7 is a schematic diagram of a hardware structure of an electronic device performing a method for customizing status bar of terminal, according to Embodiment 6 of the disclosure.

### Detailed Description of the Embodiments

In order to make the purposes, technical solutions and advantages of the disclosure clearer, the disclosure will be further described in detail below with reference to the accompanying drawings and embodiments. It is to be understood that the specific embodiments described herein are merely illustrative of the disclosure and are not intended to limit the disclosure.

It is to be noted that, if there is no conflict, the embodiments of the disclosure and various features in the embodiments may be combined with each other, and are all within the protection scope of the disclosure.

In addition, although a logical sequence is shown in the flowchart, in some cases, the steps shown or described may be performed in a different sequence from the sequence herein. Besides, the words "first" and "second" as used herein do not limit data and the order of execution, but only distinguish the same or similar items with functions and effects that are substantially the same.

### Embodiment 1:

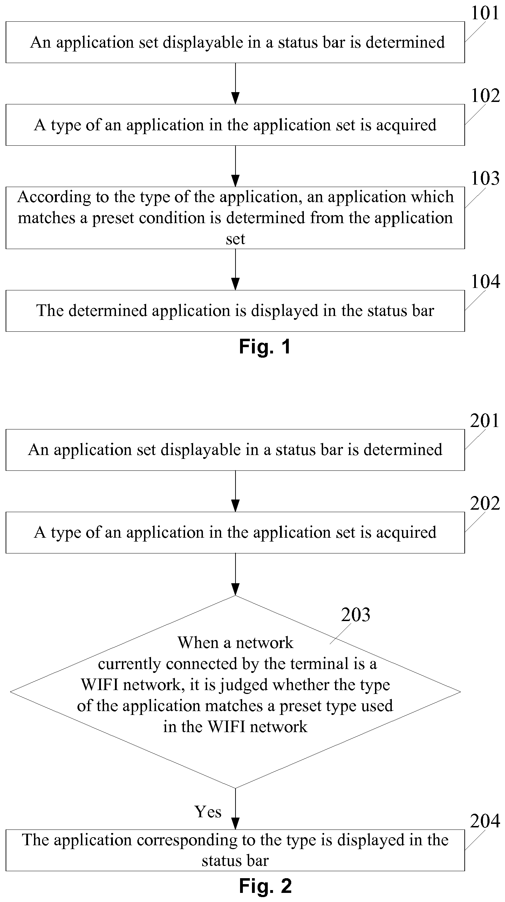

Embodiment 1 of the disclosure provides a method for customizing status bar of terminal, which can be applied to smart phones, personal computers (such as iPad), video players (such as iPod), e-book readers, smart bracelets, and other smart terminal devices. In different application scenarios, the method may be implemented by using an APP mode running on the smart terminal device, or may be implemented by using installation software in the smart terminal device, or may be implemented by using a system software function mode in the smart terminal device. As shown in Fig. 1, the method includes:
Step 101: An application set displayable in a status bar is determined.

In some embodiments, the application set is a set including multiple applications. The application is an application on the terminal, which specifically be a system application, such as Bluetooth, WIFI, cellular mobile network, or flight mode, and also be a non-system application such as WeChat, QQ, Weibo, or Taobao.

Determining an application displayable in the status bar is determining which applications in the terminal are displayable in the status bar, and aggregating the applications displayable in the status bar into an application set. These applications are not yet displayed in the status bar at this time. In the present embodiment, the application set is determined in the following two modes.

Mode 1: An application set displayable in the status bar is determined according to a usage frequency of an application within a preset time period. The preset time period is customized according to the user's will, or is customized by a terminal system. The usage frequency of the application within the preset time period is calculated, and then applications with the usage frequency higher than a preset threshold are selected, where the applications are displayable in the status bar, and the application set is established according to the applications.

Mode 2: An application set displayable in the status bar is determined according to an application used within a preset historical time period. The preset historical time period is customized according to the user's will, or is customized by the terminal system, such as yesterday or the first three days or the past week. The applications used within the preset time period are aggregated to establish the application set.

It is to be noted that, in some embodiments, the application set is also be determined by other means.

Step 102: A type of an application in the application set is acquired.

In the present embodiment, the type of the application is predefined according to the application itself.

The applications is classified according to the situation that the applications use network traffic in the same time. For example, applications that use more network traffic is classified into a first category, such as video APPs, game APPs, or singing APPs; applications that use less network traffic is classified into a second category, such as chat APPs or photo APPs; and applications that do not use network traffic is classified into a third category, such as notes, SMS and other system APPs.

The applications is also be classified according to the functional attributes of the applications. For example, a map APP, a real-time bus viewing APP, etc. is determined as a traffic category; various APPs with a preferential pay-to-buy function is determined as a preferential shopping category; and various APPs having a payment function is determined as a financial category, etc.

It is also possible to determine the type of the application according to the category of the application divided by the application market in the conventional art. Of course, in the actual application, the type of the application is also be determined by other means.

After determining the implementation mode of dividing the type of the application, the implementation mode is written to the terminal by codes, and the application of the terminal acquires its corresponding type according to the implementation mode.

Step 103: According to the type of the application, an application which matches a preset condition is determined from the application set.

In the present embodiment, the preset condition is a condition for customizing according to a scenario when the user uses the terminal, where the scenario includes a scenario in which the user is located and a usage state of the terminal, or. includes only a scenario in which the user is located, or includes only a usage state of the terminal.

For example, if the user uses the terminal at a bus stop, the preset condition is the bus stop, and in step 103, is means an application that matches the bus stop scenario is determined from the application set.

For example, if the user uses the terminal in a WIFI network, the preset condition is the WIFI network, and in step 103, is means an application that matches the WIFI network scenario is determined from the application set.

For example, if the user uses the terminal in a restaurant and the terminal is connected to a WIFI network, the preset condition is the restaurant and connection to the WIFI network, and in step 103, an application that matches the scenario namely the restaurant and matches the WIFI network is determined from the application set.

It is to be noted that, while defining the preset condition, the type of the application that can be used under the preset condition is also defined. Therefore, the application matching the preset condition is determined here by the type of the application.

Step 104: The determined application is displayed in the status bar.

After determining applications that meet the preset condition in the application set, the determined applications are displayed in a status bar of the terminal. Specifically, icons of the applications are displayed, and the user can pull down or slide up to open the status bar and directly click on the icons of the applications in the status bar to quickly open or close the applications.

The embodiment of the disclosure provides a method for customizing status bar of terminal,. According to the method, an application set displayable in a status bar and a type of each application in the application set are acquired, and an application which is finally displayed in the status bar is selected from the application set according to the type of the application and a preset condition. The implementation mode enriches the method for customizing status bar of terminal, and allows applications that are displayed in the status bar to adapt to different user scenarios as well as different usage states of a terminal, thus carrying out more accurate display and improving user experience.

### Embodiment 2:

Please refer to Fig. 2. Fig. 2 is a schematic flowchart of a method for customizing status bar of terminal, according to Embodiment 2 of the disclosure. The method provided by the embodiment of the disclosure is also applicable to the smart terminal device in Embodiment 1 above. As shown in Fig. 2, the method includes:
Step 201: An application set displayable in a status bar is determined.
Step 202: A type of an application in the application set is acquired.

The above steps 201-202 are based on the same inventive concept as the method steps 101-102 in Embodiment 1. Specifically, reference is made to the description in Embodiment 1, and details are not described herein again.

Step 203: When a network currently connected by the terminal is a WIFI network, it is judged whether the type of the application matches a preset type used in the WIFI network.

Step 204: If the type of the application matches the preset type used in the WIFI network, the application corresponding to the type is displayed in the status bar.

In the present embodiment, the application displayed in the status bar is determined according to the WIFI network to which the terminal is connected. It can be understood that since there is no restriction on network traffic in the WIFI network, the application used in the WIFI network includes all applications on the terminal. At this time, the preset type used in the WIFI network includes all application types.

In the present embodiment, when the number of applications in the application set is greater than the number of locations in the status bar that can display the applications, and the applications in the application set is used in the WIFI network. For example, there are 10 applications in the application set, and the types of the 10 applications match the preset type used in the WIFI network, but the status bar can only display 5 applications. At this time, 5 applications are selected from the 10 applications according to the usage frequency of the user for display in the status bar; 5 applications can also be selected from the 10 applications according to the sequence of time when the user uses the applications for display in the status bar; and 5 applications can also be selected from the 10 applications according to the importance level of the applications in the application set for display in the status bar. Of course, in the actual application, the application displayed in the status bar can also be determined by other methods.

Further, a mode of displaying the application in the status bar is also be determined. For example, the most frequently used application is placed in the middle of the status bar, or the most recently used application is placed in the first place of the status bar, and so on.

In some embodiments, the preset type used in the WIFI network is also be customized by the user according to the user's preference.

In some embodiments, the system is also default to some applications that must be displayed in the status bar in the WIFI network, such as WIFI or a mobile network. The user can quickly turn on or off the WIFI and the mobile network by operating a WIFI icon and an icon of the mobile network in the status bar. Especially when detecting that the currently connected WIFI is an insecure network, the user can operate the WIFI icon in the status bar in time to turn off the WIFI, and when the user wants to turn off the mobile network in the WIFI network, it is only necessary to operate the icon of the mobile network in the status bar to make it turned off.

In some embodiments it is to be noted that the preset type used in the WIFI network is also be determined by other means.

The embodiment of the disclosure provides a method for customizing status bar of terminal,. According to the method, an application set displayable in a status bar and a type of each application in the application set are acquired, and then the type of the application in the application set is matched with the type of the application that can be used in a WIFI network, so as to determine the application displayed in the status bar. The implementation mode enriches the method for customizing status bar of terminal,. The application displayed in the status bar conforms to a network to which a current terminal is connected, and the demands of a user are met, thereby improving the user experience.

### Embodiment 3:

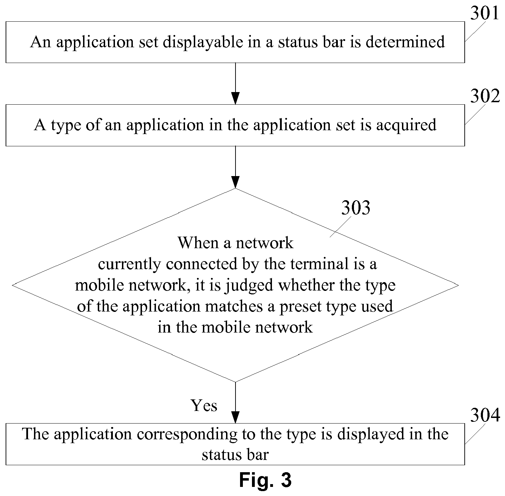

Please refer to Fig. 3. Fig. 3 is a schematic flowchart of a method for customizing status bar of terminal, according to Embodiment 3 of the disclosure. The method provided by the embodiment of the disclosure is also applicable to the smart terminal device in Embodiment 1 above. As shown in Fig. 3, the method includes:
Step 301: An application set displayable in a status bar is determined.
Step 302: A type of an application in the application set is acquired.

The above steps 301-302 are based on the same inventive concept as the method steps 101-102 in Embodiment 1. Specifically, reference is made to the description in Embodiment 1, and details are not described herein again.

Step 303: When a network currently connected by the terminal is a mobile network, it is judged whether the type of the application matches a preset type used in the mobile network.

Step 304: If the type of the application matches the preset type used in the mobile network, the application corresponding to the type is displayed in the status bar.

In the present embodiment, the application displayed in the status bar is determined according to the mobile network to which the terminal is connected. The mobile network includes a 2G network, a 3G network, a 4G network, and the like.

It can be understood that as the network traffic is greater, more mobile network traffic is consumed, and the cost of the user is higher. Therefore, when the terminal is connected to the mobile network, the user generally does not use an application that consumes a large amount of traffic. Therefore, the type of the application that matches the preset type used in the mobile network should be an application with low network traffic consumption within the same usage time. At the same time, other applications that need to consume a large amount of data traffic are filtered, and the application with low network traffic consumption is displayed in the status bar.

For example, when the user terminal is connected to the 4G network, an APP that consumes a large amount of traffic such as "XX video" or "XX sing bar" is not displayed in the status bar, even if these APPs are APPs frequently used by users, when connected to a 4G network, these APPs are not displayed by default in the status bar.

The applications that consume less network traffic are displayed in the status bar above. When determining the applications that consume less network traffic, they are determined according to the usage frequency thereof or the time when they are used recently. It is also possible to pre-define according to the user's preference, and determine the application displayed in the status bar according to the predefined manner. It is also possible to display the application displayed by default in the status bar in the mobile network, such as the icon of the mobile network. Since the mobile network is currently connected, when the terminal itself contains insufficient traffic packets or the user wants to turn off the mobile network, the mobile network can be quickly turned off by simply operating the icon of the mobile network in the status bar. There are other ways to determine how the application that consumes less network traffic is displayed in the status bar.

The embodiment of the disclosure provides a method for customizing status bar of terminal,. According to the method, an application set displayable in a status bar and a type of each application in the application set are acquired, and then the type of the application in the application set is matched with the type of the application that can be used in a mobile network, so as to determine the application displayed in the status bar. The implementation mode enriches the method for customizing status bar of terminal,. The application displayed in the status bar conforms to a network to which a current terminal is connected, and the demands of a user are met, thereby improving the user experience.

### Embodiment 4:

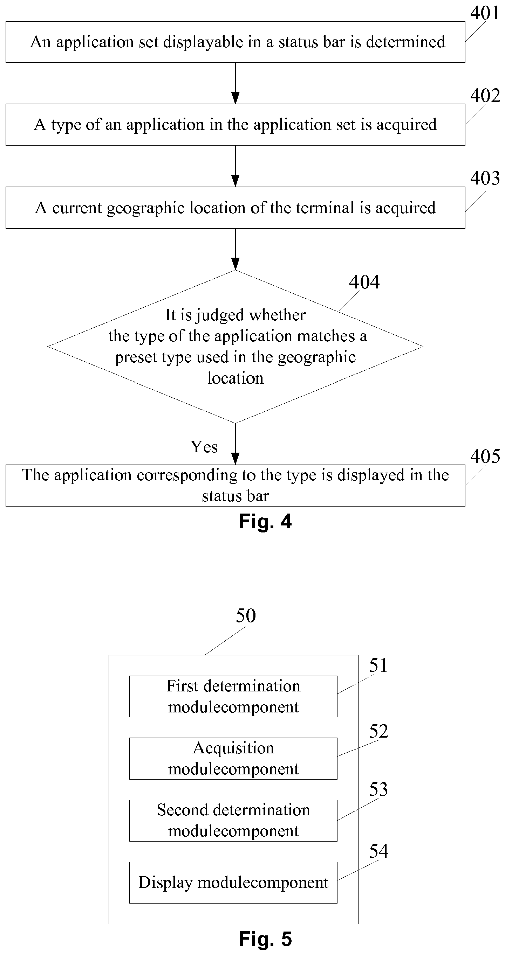

Please refer to Fig. 4. Fig. 4 is a schematic flowchart of a method for customizing status bar of terminal, according to Embodiment 4 of the disclosure. The method provided by the embodiment of the disclosure is also applicable to the smart terminal device in Embodiment 1 above. As shown in Fig. 4, the method includes:
Step 401: An application set displayable in a status bar is determined.
Step 402: A type of an application in the application set is acquired.

The above steps 401-402 are based on the same inventive concept as the method steps 101-102 in Embodiment 1. Specifically, reference is made to the description in Embodiment 1, and details are not described herein again.

Step 403: A current geographic location of the terminal is acquired.

In some embodiments, the geographic location of the terminal is determined according to a GPS component included in the terminal. The current geographic location of the terminal is also be determined by a method of network positioning. The specific implementation modes of the GPS positioning and the network positioning are described in the related art, and are not limited herein.

Step 404: It is judged whether the type of the application matches a preset type used in the geographic location.

Step 405: If the type of the application matches the preset type used in the geographic location, the application corresponding to the type is displayed in the status bar.

In the present embodiment, the application displayed in the status bar is determined according to the current location of the terminal. The application in the application set that matches the geographic location is selected and displayed in the status bar.

In some embodiments, the preset type used in the geographic location can analyze the potential behavior of the user according to the meaning represented by the geographic location itself, thereby determining the application corresponding to the geographic location according to the potential behavior of the user.

For example, it is detected that the terminal is at the bus station, and it is analyzed that the potential behavior of the user includes bus taking, line searching, etc. At this time, some map navigation APPs and real-time bus query APPs are displayed in the status bar of the terminal. Or, it is detected that the terminal is in a movie theater, and it is analyzed that the potential behavior of the user is movie watching. At this time, some APPs for purchasing movie tickets are displayed in the status bar of the terminal. Or, it is detected that the terminal is in a supermarket or a shopping mall, and it is analyzed that the potential behavior of the user is payment. At this time, some payment type APPs are displayed in the status bar of the terminal, and so on.

The embodiment of the disclosure provides a method for customizing status bar of terminal,. According to the method, an application set displayable in a status bar and a type of each application in the application set are acquired, and then the type of the application in the application set is matched with the type of the application that can be used in a geographic location of the terminal, so as to determine the application displayed in the status bar. The implementation mode enriches the method for customizing status bar of terminal,. The application displayed in the status bar conforms to a geographic location of a current terminal, and the demands of a user are met, thereby improving the user experience.

### Embodiment 5:

Refer to Fig. 5. Fig. 5 is a schematic structural diagram of an apparatus for customizing status bar of terminal, according to Embodiment 5 of the disclosure. As shown in Fig. 5, the apparatus 50 includes a first determination component 51, an acquisition component 52, a second determination component 53, and a display component 54.

The first determination component 51 is configured to determine an application set displayable in a status bar; the acquisition component 52 is configured to acquire a type of an application in the application set; the second determination component 53 is configured to determine, according to the type of the application, an application which matches a preset condition from the application set; and the display component 54 is configured to display the determined application in the status bar.

The first determination component 51 is specifically configured to: determine an application set displayable in the status bar according to a usage frequency of an application within a preset time period; or, determine an application set displayable in the status bar according to an application used within a preset historical time period.

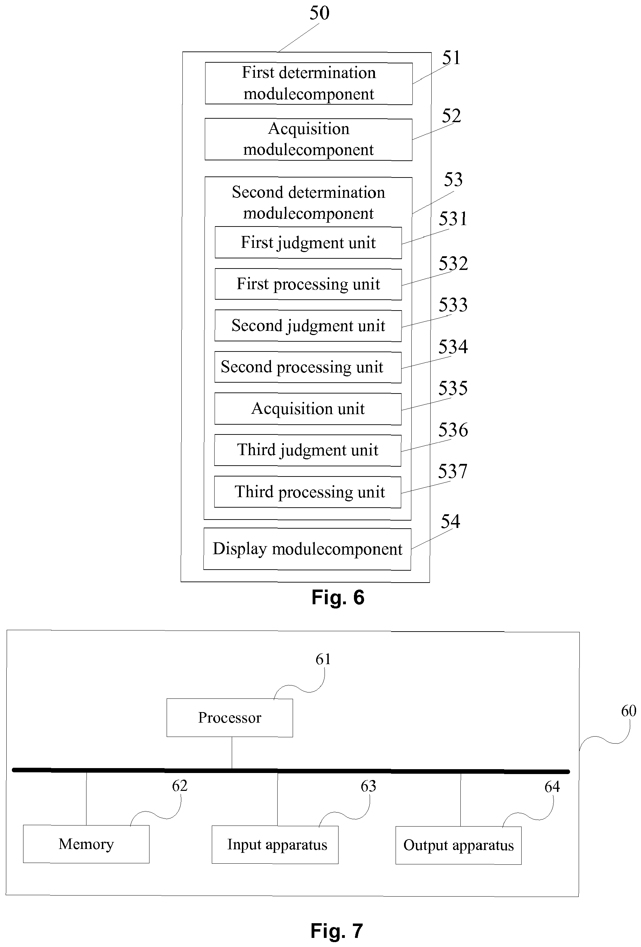

As shown in Fig. 6, in some embodiments, the second determination component 53 includes: a first judgment unit 531 and a first processing unit 532. The first judgment unit 531 is configured to judge, when a network currently connected by the terminal is a WIFI network, whether the type of the application matches a preset type used in the WIFI network; and the first processing unit 532 is configured to use, if the type of the application matches the preset type used in the WIFI network, the application corresponding to the type as an application matching a preset condition.

Also referring to Fig. 6, in some embodiments, the second determination component 53 further includes: a second judgment unit 533 and a second processing unit 534. The second judgment unit 533 is configured to judge, when a network currently connected by the terminal is a mobile network, whether the type of the application matches a preset type used in the mobile network; and the second processing unit 534 is configured to use, if the type of the application matches the preset type used in the mobile network, the application corresponding to the type as an application matching a preset condition.

Also referring to Fig. 6, in some embodiments, the second determination component 53 further includes: an acquisition unit 535, a third judgment unit 536 and a third processing unit 537. The acquisition unit 535 is configured to acquire a current geographic location of the terminal; the third judgment unit 536 is configured to judge whether the type of the application matches a preset type used in the geographic location; and the third processing unit 537 is configured to use, if the type of the application matches the preset type used in the geographic location, the application corresponding to the type as an application matching a preset condition.

It is to be noted that since the information interaction, the execution process, and the like between the components and units in the apparatus for customizing status bar of terminal, in the embodiment of the disclosure are based on the same concept as the method embodiment of the disclosure, the specific content is also applicable to the apparatus for customizing status bar of terminal,. The various components in the embodiments of the disclosure can be implemented as separate hardware or software, and a combination of functions of the respective units are implemented using separate hardware or software as needed.

The embodiment of the disclosure provides an apparatus for customizing status bar of terminal,. According to the apparatus, an application set displayable in a status bar and a type of each application in the application set are acquired, and an application which is finally displayed in the status bar is selected from the application set according to the type of the application and a preset condition. The implementation mode enriches the method for customizing status bar of terminal, and allows applications that are displayed in the status bar to adapt to different user scenarios as well as different usage states of a terminal, thus carrying out more accurate display and improving user experience.

### Embodiment 6:

Referring to Fig. 7, Fig. 7 is a schematic diagram of a hardware structure of an electronic device for performing a method for customizing status bar of terminal, according to Embodiment 6 of the disclosure. As shown in Fig. 7, the electronic device 60 includes:
one or more processors 61 and a memory 62, as exemplified by one processor 61 in Fig. 7.

The processor 61 and the memory 62 is connected by a bus or other means, as exemplified by a bus connection in Fig. 7.

The electronic device for performing the method for customizing status bar of terminal, further includes: an input apparatus 63 and an output apparatus 64.

The memory 62 is used as a non-volatile computer-readable storage medium, and is configured to store non-volatile software programs, non-volatile computer-executable programs, and components, such as program instructions/components (for example, the first determination component 51, the acquisition component 52, the second determination component 53 and the display component 54 shown in Fig. 5) corresponding to the method for customizing status bar of terminal, in the embodiment of the disclosure. The processor 61 executes various functional applications of the server and data processing by executing non-volatile software programs, instructions and components stored in the memory 62, that is, implementing the method for customizing status bar of terminal, of the above method embodiments.

In some embodiments, the memory 62 includes a storage program area and an storage data area, where the storage program area stores an operating system and an application required for at least one function; and the storage data area stores data created according to usage of the apparatus for customizing status bar of terminal, and the like. In addition, the memory 62 includes a high-speed RAM, and further includes a non-volatile memory such as a disk storage device, a flash device, or other non-volatile solid storage devices. In some embodiments, the memory 62 optionally includes memories remotely located relative to the processor 61, which is connected to the apparatus for customizing status bar of terminal, over a network. The examples of such networks include, but are not limited to, the Internet, the Intranet, local area networks, mobile communication networks, and combinations thereof.

The input apparatus 63 receives input digital or character information and generate a key signal input related to user settings and function control of the apparatus for customizing status bar of terminal,. The output apparatus 64 includes a display device such as a display screen.

The one or more components are stored in the memory 62, and when executed by the one or more processors 61, the method for customizing status bar of terminal, in any of the above method embodiments is performed. For example, the above described method step 101 to step 104 in Fig. 1, method step 201 to step 204 in Fig. 2, method step 301 to step 304 in Fig. 3, and method step 401 to step 405 in Fig. 4 are performed, and components 51-54 in Fig. 5 and components 51-54 and units 531-537 in Fig. 6 are implemented.

The above products perform the methods provided by the embodiments of the disclosure, and have the corresponding functional components and beneficial effects of the execution method. For technical details that are not described in detail in the present embodiment, reference is made to the method provided by the embodiments of the disclosure.

The electronic device of the embodiment of the disclosure exists in various forms, including but not limited to:
(1) Mobile communication devices: these devices are characterized by having a mobile communication function and are mainly aimed at providing voice and data communication. Such terminals include: smart phones, multimedia phones, functional phones, and low-end phones.
(2) Ultra-mobile personal computer devices: such devices belong to personal computers, having computing and processing functions, and generally having the characteristic of mobile Internet access. Such terminals include: PDAs, MIDs, and UMPC devices.
(3) Other electronic devices having a data interaction function.

### Embodiment 7:

The embodiment of the disclosure provides a non-volatile computer-readable storage medium which stores computer-executable instructions that are executed by an electronic device to perform the method for customizing status bar of terminal, in any of the above method embodiments. For example, the above described method step 101 to step 104 in Fig. 1, method step 201 to step 204 in Fig. 2, method step 301 to step 304 in Fig. 3, and method step 401 to step 405 in Fig. 4 are performed, and the functions of components 51-54 in Fig. 5 and components 51-54 and units 531-537 in Fig. 6 are implemented.

### Embodiment 8:

The embodiment of the disclosure provides a computer program product, including a computing program stored on a non-volatile computer-readable storage medium, the computer program includes program instructions, and when the program instructions are executed by a computer, the computer performs the method for customizing status bar of terminal, in any of the above method embodiments. For example, the above described method step 101 to step 104 in Fig. 1, method step 201 to step 204 in Fig. 2, method step 301 to step 304 in Fig. 3, and method step 401 to step 405 in Fig. 4 are performed, and components 51-54 in Fig. 5 and components 51-54 and units 531-537 in Fig. 6 are implemented.

The apparatus embodiments described above are merely illustrative, wherein the units described as separate components may or may not be physically separated, and the components displayed as units may or may not be physical units, which are located in one place or distributed to multiple network units. Some or all of the components are selected according to actual needs to achieve the purpose of the solution of the present embodiment.

Through the description of the above implementation modes, those of ordinary skill in the art can clearly understand that each implementation mode is implemented by means of software plus a necessary general hardware platform, and of course, may also be implemented through hardware. Those skilled in the art can understand that all or part of the processes in the above method embodiments are implemented by a computer program to instruct related hardware and the program is stored in a computer-readable storage medium. When the program is executed, the flow of each method embodiment as described above is included. The storage medium is a magnetic disk, an optical disk, a Read-Only Memory (ROM), or a Random Access Memory (RAM).

Finally, it is to be noted that the above embodiments are only used to illustrate the technical solutions of the disclosure, and are not limited thereto. The technical features in the above embodiments or different embodiments may also be combined under the concept of the disclosure, the steps are implemented in any order, there are many other variations of different aspects of the disclosure as described above, and for the sake of brevity, they are not provided in the details. Although the disclosure has been described in detail with reference to the foregoing embodiments, those skilled in the art should understand that the technical solutions described in the foregoing embodiments are modified, or some technical features are equivalently replaced, but the modifications and replacements do not make the essence of the corresponding technical solutions depart from the scope of the technical solutions of various embodiments of the disclosure.

## Claims

1. A method for customizing status bar of terminal, comprising:
determining an application set displayable in a status bar;
acquiring a type of an application in the application set;
determining, according to the type of the application, an application which matches a preset condition from the application set; and
displaying the determined application in the status bar.

2. The method according to claim 1, wherein determining an application set displayable in a status bar comprises:
determining an application set displayable in the status bar according to a usage frequency of an application within a preset time period; or
determining an application set displayable in the status bar according to an application used within a preset historical time period.

3. The method according to claim 1 or 2, wherein
determining, according to the type of the application, an application which matches a preset condition from the application set comprises:
in a case that a network currently connected by the terminal is a WIFI network, judging whether the type of the application matches a preset type used in the WIFI network; and
if the type of the application matches the preset type used in the WIFI network, using the application corresponding to the type as an application matching a preset condition.

4. The method according to claim 1 or 2, wherein
determining, according to the type of the application, an application which matches a preset condition from the application set comprises:
in a case that a network currently connected by the terminal is a mobile network, judging whether the type of the application matches a preset type used in the mobile network; and
if the type of the application matches the preset type used in the mobile network, using the application corresponding to the type as an application matching a preset condition.

5. The method according to claim 1 or 2, wherein
determining, according to the type of the application, an application which matches a preset condition from the application set comprises:
acquiring a current geographic location of the terminal;
judging whether the type of the application matches a preset type used in the geographic location; and
if the type of the application matches the preset type used in the geographic location, using the application corresponding to the type as an application matching a preset condition.

6. An apparatus for customizing status bar of terminal, comprising:
a first determination component, configured to determine an application set displayable in a status bar;
an acquisition component, configured to acquire a type of an application in the application set;
a second determination component, configured to determine, according to the type of the application, an application which matches a preset condition from the application set; and
a display component, configured to display the determined application in the status bar.

7. The apparatus according to claim 6, wherein the first determination component is specifically configured to: determine an application set displayable in the status bar according to a usage frequency of an application within a preset time period; or, determine an application set displayable in the status bar according to an application used within a preset historical time period.

8. The apparatus according to claim 6 or 7, wherein
the second determination component comprises: a first judgment unit and a first processing unit, wherein
the first judgment unit is configured to judge, in a case that a network currently connected by the terminal is a WIFI network, whether the type of the application matches a preset type used in the WIFI network; and
the first processing unit is configured to use, if the type of the application matches the preset type used in the WIFI network, the application corresponding to the type as an application matching a preset condition.

9. The apparatus according to claim 6 or 7, wherein
the second determination component comprises: a second judgment unit and a second processing unit, wherein
the second judgment unit is configured to judge, in a case that a network currently connected by the terminal is a mobile network, whether the type of the application matches a preset type used in the mobile network; and
the second processing unit is configured to use, if the type of the application matches the preset type used in the mobile network, the application corresponding to the type as an application matching a preset condition.

10. The apparatus according to claim 6 or 7, wherein
the second determination component comprises: an acquisition unit, a third judgment unit and a third processing unit, wherein
the acquisition unit is configured to acquire a current geographic location of the terminal;
the third judgment unit is configured to judge whether the type of the application matches a preset type used in the geographic location; and
the third processing unit is configured to use, if the type of the application matches the preset type used in the geographic location, the application corresponding to the type as an application matching a preset condition.

11. An electronic device, comprising:
at least one processor; and
a memory that communicates with at least one processor, wherein
the memory stores an instruction executable by the at least one processor, and the instruction is executed by the at least one processor such that the at least one processor performs the method according to any one of claims 1 to 5.
